# EUROPÄISCHE PATENTSCHRIFT

(11) **EP 1 762 833 B1**
(45) Veröffentlichungstag und Bekanntmachung des Hinweises auf die Patenterteilung: **14.12.2011**
(21) Anmeldenummer: 06016882.0
(22) Anmeldetag: 12.08.2006
(51) Int. Cl.: G01M 13/02, F16D 48/06

(54) **Verfahren zur Kupplungsprüfung**
Clutch testing method
Procédé destiné à la vérification d'un embrayage

(30) Priorität: 10.09.2005 DE 102005043146
(43) Veröffentlichungstag der Anmeldung: 14.03.2007
(73) Patentinhaber: Schaeffler Technologies GmbH & Co. KG, 91074 Herzogenaurach (DE)
(72) Erfinder: Schmitt, Werner, 76547 Sinzheim (DE); Bührle, Peter, Dr., 76275 Ettlingen (DE)

(56) Entgegenhaltungen:
- EP-A- 1 571 362
- JP-A- 5 087 690
- DATABASE WPI Section EI, Week 198508 Derwent Publications Ltd., London, GB; Class S02, AN 1985-048916 [08] XP002412887 "Vehicle clutch test device - has mechanism to press brake pedal and accelerator until max. torque is reached and manometer fixes forced on clutch pedal" -& SU 1 103 106 A ((SAPO) SARAT POLY) 15. Juli 1984 (1984-07-15)

## Beschreibung

Die vorliegende Erfindung befasst sich mit einem Verfahren zur Prüfung der Kupplungssteuerung eines Fahrzeugs, wobei ein Fahrzeugmotor, der mit der Kupplung verbunden ist, durch eine Motorsteuerung gesteuert wird und der Fahrzeugmotor ein Motordrehmoment hervorbringt.

Verfahren zur Prüfung der Kupplungssteuerung werden zum Beispiel bei der Fertigstellung eines Fahrzeugs durchgeführt. Dabei wird geprüft, ob die Kupplungssteuerung des gefertigten Fahrzeugs die erwarteten Eigenschaften besitzt. Zum Beispiel soll bei solchen Kupplungssteuerungsprüfungen ermittelt werden, ob die Kupplungssteuerung entsprechend den vorher festgelegten Vorgaben die Kupplung steuert. Ein Indiz dafür ist, dass die Kupplungssteuerung von dem richtigen Tastpunkt der Kupplung ausgeht. Der Tastpunkt einer Kupplung ist dann erreicht, wenn sich die Anpressscheibe und die Kupplungsscheibe berühren.

Um zu ermitteln, ob die Kupplungssteuerung von dem korrekten Tastpunkt ausgeht, wird das Fahrzeug auf einem Rollenprüfstand platziert. Auf dem Rollenprüf stand wird das Fahrpedal des Fahrzeugs betätigt, worauf der Fahrzeugmotor ein Drehmoment hervorbringt und die Räder des Fahrzeugs beschleunigt werden. Während dieser "Anfahrt" des Fahrzeugs wird die Reibenergie der Kupplung ermittelt. Ist die Reibenergie innerhalb einer vorher bestimmten Grenze, so wird angenommen, dass der Tastpunkt der Kupplung von der Kupplungssteuerung korrekt gelernt wurde. Unter- oder überschreitet die ermittelte Reibenergie jedoch die vorher bestimmten Grenzwerte, so muss davon ausgegangen werden, dass der angenommene Tastpunkt falsch ist.

Das Fahrzeug wird auf dem Rollenprüfstand durch einen Fahrer gesteuert. Dieser Fahrer beschleunigt die Räder des Fahrzeugs, indem er das Fahrpedal mehr oder weniger stark betätigt und evtl. die Gänge des Fahrzeuggetriebe entsprechend auswählt. Insbesondere die Fahrpedalstellung und der Gradient der Fahrpedalbetätigung ist fahrerspezifisch. Die Anfahrstrategie ist dadurch sowohl von Fahrer zu Fahrer verschieden, als auch unterscheiden sich die Anfahrstrategien eines einzelnen Fahrers untereinander.

Die in der Kupplung auftretende Reibenergie ist jedoch abhängig von der Energie, die vom Fahrzeugmotor auf die Kupplung übertragen wird. Zum einen kann, je weniger Energie der Kupplung vom Motor zur Verfügung steht, desto weniger Energie in Reibenergie umgewandelt werden, zum anderen reagiert die Kupplungssteuerung unterschiedlich auf verschieden energiereiche Beschleunigungen, so dass auch deshalb verschieden große Beträge an Reibenergie in der Kupplung auftreten.

Durch diese unterschiedlich energiereichen Anfahrten ist es schwierig die Reibenergie der Kupplung zuverlässig zu bewerten und somit ein Fahrzeug mit einem korrekt gelernten Tastpunkt von einem Fahrzeug mit einem falsch gelernten Tastpunkt zu unterscheiden.

Aus der SU 1103106 A ist eine Anordnung bekannt, bei der eine pedalbetätigte Kupplung auf Funktion überprüft wird. Die JP 5-87690 A ist ein Kupplungsprüfstand zur Charakterisierung von Kupplungen bekannt. Die EP 1 571 362 A1 offenbart ein Verfahren zur Tastpunktermittlung einer automatisierten Kupplung bei Erst- oder Wiederinbetriebnahme des Fahrzeugs. Das Verfahren wird durch Quittieren am Diagnosegerät gestartet.

Aufgabe der vorliegenden Erfindung ist es, eine zuverlässigere Überprüfung der Kupplungssteuerung zu ermöglichen.

Die Lösung der Aufgabe ergibt sich aus den Merkmalen des kennzeichnenden Teils des ersten Anspruchs. Vorteilhafte Weiterbildungen der Erfindung ergeben sich aus den Unteransprüchen.

Gemäß der Erfindung wird das Motordrehmoment durch ein Diagnosemittel der Motorsteuerung vorgegeben. Durch diese Vorgabe wird der Fahrzeugmotor so gesteuert, dass er das gewünschte Drehmoment hervorbringt. Dadurch ist die Größe des Drehmoments nicht mehr von der Stellung des Fahrpedals und somit auch nicht mehr vom jeweiligen Fahrer abhängig. Die feste Vorgabe des Motordrehmoments durch das Diagnosemittel macht die Prüfung der Kupplungssteuerung nachvollziehbar, da nicht mehr Anfahrten mit unterschiedlichen Energiegehalt durchgeführt werden, sondern die Anfahrt durch die Vorgabe des Motordrehmoments einen vorbestimmten, ermittelbaren Energiegehalt hat. Die Unterscheidung von Fahrzeugen, deren Kupplungssteuerung den Vorgaben entspricht, von solchen deren Kupplungssteuerung nicht den Vorgaben entspricht, wird zuverlässiger. Durch die Vorgabe des Motordrehmoments mittels eines Diagnosegerätes kann das Drehmoment durch das Prüfgerät selbst vorgegeben werden. Dies erleichtert zu einem den Aufbau der Erfindung, da das Einstellen des Momentes bzw. das Ermitteln des gewünschten Momentes nicht in der Fahrzeugelektronik geschehen muss, zum anderen können so leicht die Prüfergebnisse und die Momentenvorgabe zusammengeführt werden, was die Beurteilung der Prüfung erleichtert.

Das Motordrehmoment kann über ein Steuermittel, das die Kupplung und/oder das Getriebe steuert, der Motorsteuerung vorgegeben werden. Da in der Regel ein Diagnosemittel zur Prüfung der Kupplungssteuerung mit dem Steuermittel zur Kupplung- und/oder Getriebesteuerung verbunden ist, ist es besonders vorteilhaft, wenn dieses Diagnosemittel das Drehmoment nicht direkt der Motorsteuerung vorgibt, sondern dem Steuermittel zur Kupplungs- und/oder Getriebesteuerung. So muss das Diagnosemittel nicht zusätzlich mit der Motorsteuerung verbunden werden, was die Prüfungsvorbereitungen erleichtert.

Vorteilhaft wird bei der Prüfung der Kupplungssteuerung die Reibenergie der Kupplung ermittelt. Da nun durch die Vorgabe des Drehmoments das Drehmoment, dass durch den Fahrzeugmotor hervorgebracht wird, bekannt ist, lässt sich leicht die Energie ermitteln, die der Fahrzeugmotor der Kupplung bereitstellt. Durch Messung der Energie, die über die Kupplung übertragen wird, kann dann die Reibenergie der Kupplung nachvollziehbar ermittelt werden. Dadurch wird es möglich, zuverlässig zu erkennen, ob die Kupplungssteuerung den Tastpunkt der Kupplung korrekt erlernt hat oder von einem falschen Tastpunkt ausgeht.

Die Kupplungssteuerung kann mittels eines Rollenprüfstands geprüft werden. Dabei stehen zumindest die Antriebsräder auf Rollen, so dass die Antriebsräder bewegt werden können, ohne das sich das Fahrzeug als Ganzes bewegt. Mittels der Rollen lässt sich auch das Drehmoment der Räder und somit die Energie, die von den Rädern auf die Rolle übertragen wird, ermitteln. Diese Energie entspricht in etwa der Energie, die von der Kupplung übertragen wird. Somit kann zum Beispiel einfach, ohne dass weitere Messsensoren angebracht werden, über die Räder die Reibenergie der Kupplung ermittelt werden. Dadurch wird die Prüfung der Kupplungssteuerung noch weiter vereinfacht.

Das Drehmoment kann aufgrund einer Fahrpedalbetätigung der Motorsteuerung vorgegeben werden. Die Fahrpedalbetätigung des Fahrers signalisiert dabei, dass der Fahrer davon ausgeht, dass der Fahrzeugmotor nun ein Drehmoment hervorbringt. Das Drehmoment des Fahrzeugmotors kommt also für den Fahrer nicht überraschend, auch wenn das Drehmoment eventuell nicht der Stellung des Fahrpedals entspricht. So ist der Fahrer davor geschützt, dass der Motor zu einem überraschenden Zeitpunkt ein Drehmoment auf die Kupplung überträgt und so eventuell den Fahrer oder umstehende Personen gefährdet.

Vorteilhaft wird das Drehmoment aufgrund einer maximalen Fahrpedalbetätigung der Motorsteuerung vorgegeben. So kann verhindert werden, dass durch versehentliches Berühren des Fahrpedals die Momentenvorgabe gestartet wird. Aufgrund dieser extremen Stellung des Fahrpedals kann davon ausgegangen werden, dass der Fahrer das Fahrpedal willentlich betätigt hat. Weiter kann verhindert werden, dass der Fahrer von der Momentenvorgabe überrascht wird. Da er das Fahrpedal maximal betätigt, geht er davon aus, dass der Motor maximal beschleunigt. Ist das durch das Diagnosemittel vorgegebene Moment geringer als das durch die maximale Fahrpedalstellung angeforderte, so verursacht dies während der Prüfung keine Gefährdungssituation. Auch ist die maximale Betätigung des Fahrpedals eine leicht für den Fahrer erkennbare und fixierbare Position. Es ist für den Fahrer also leicht nachzuvollziehen, wann die Momentenvorgabe stattfindet.

Durch das Ende der vorgesehenen Fahrpedalbetätigung kann die Drehmomentvorgabe zur Prüfung der Kupplungssteuerung beendet werden. Dadurch kann der Fahrer, der das Fahrzeug während der Prüfung bedient, die Drehmomentvorgabe durch das Diagnosegerät jederzeit wieder beenden. Dies macht es möglich, dass der Fahrer sofort auf unerwartete Situationen reagieren kann, wodurch die Sicherheit während der Prüfung noch weiter erhöht wird.

Wird das Drehmoment aufgrund einer Fahrpedalbetätigung vorgegeben, so kann der Motorsteuerung das Drehmoment als Anteil des durch die Fahrpedalstellung angeforderten Drehmoments vorgegeben werden. Dies ist besonders bevorzugt, da die Steuerungsmittel zur Steuerung des Getriebes und/oder der Kupplung oftmals in der Lage sind, die Motorsteuerung zu einer Reduktion des Motordrehmoments zu veranlassen. Somit muss keine neue Kommunikation zwischen der Motorsteuerung und dem Diagnosemittel bzw. dem Steuergerät entwickelt werden. Das durch den Motor hervorgebrachte Drehmoment bleibt aber dennoch nachvollziehbar, wenn die Fahrpedalstellung zur Durchführung der Prüfung zwingend vorgegeben ist.

Um ein unerwünschte Drehmomentvorgabe zu verhindern kann die Drehmomentvorgabe zur Prüfung der Kupplungssteuerung auf bestimmte Positionen der Fahrzeugproduktion beschränkt werden. Dies kann zum Beispiel durch das Verknüpfen des evtl. ortsfest installierten Diagnosegeräts mit der Motorsteuerung geschehen. So kann die Drehmomentvorgabe auf das Ende der Fahrzeugproduktion beschränkt werden und somit eine unerwünschte Drehmomentvorgabe in anderen Bereichen der Produktion und/oder auf der Strasse mit größter Sicherheit vermieden werden.

Vorteilhafterweise wird durch das Diagnosemittel ein Drehmomentverlauf vorgegeben. Dadurch kann die Kupplungssteuerung nicht nur anhand der Vorgabe eines einzelnen Drehmoments geprüft werden, sondern für mehrere Motordrehmomente, was die Prüfung noch weiter verbessern kann.

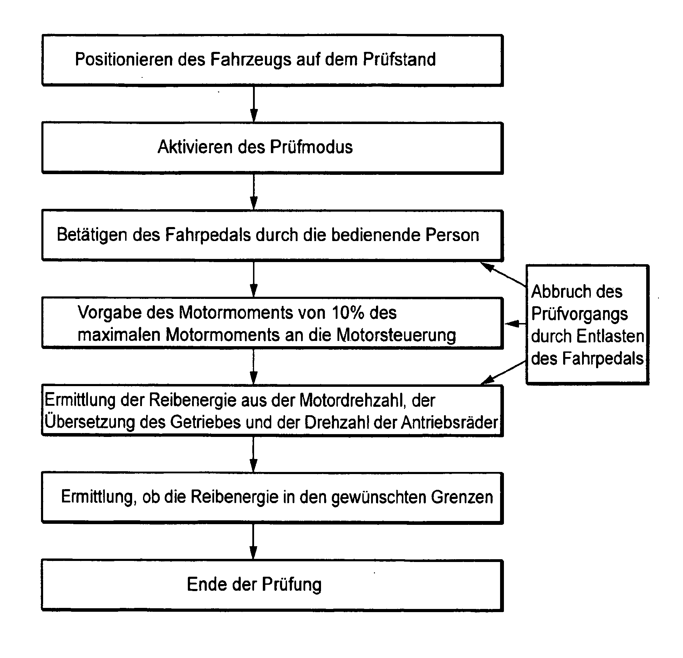

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt die einzige Zeichnung eine Durchführung des erfindungsgemäßen Verfahrens.

In einem ersten Schritt wird das Fahrzeug auf einem Rollenprüfstand platziert. Dabei werden alle Räder des Fahrzeugs auf den Rollen positioniert, so dass die Antriebsräder bewegt werden können, ohne das Fahrzeug zu bewegen. Weiter wird das Prüfgerät (Diagnosemittel) mit dem Steuermittel zur Getriebe- und Kupplungssteuerung über Kabel verbunden. Dadurch wird Prüfmodus aktiviert (Schritt 2). Diese Aktivierung bewirkt, dass die Drehmomentvorgabe zur Prüfung der Kupplungssteuerung nur stattfinden kann, wenn das Diagnosegerät mit dem Steuermittel verbunden ist. Dadurch wird die Drehmomentvorgabe aus Sicherheitsgründen auf den Endbereich der Fahrzeugproduktion beschränkt.

In einem dritten Schritt betätigt die Person, die den Wagen während der Prüfung bedient, (Fahrer) das Fahrpedal. Der Fahrer muss dabei das Fahrpedal maximal durchdrücken (Kick-down-position), damit das Prüfgerät dem Steuermittel zur Getriebe- und Kupplungssteuerung eine Motordrehmomentvorgabe übergibt. Drückt der Fahrer während der Prüfung das Fahrpedal nicht maximal durch, so wird die Drehmomentvorgabe unterbrochen und der Fahrzeugmotor reagiert, wie im Normalbetrieb, entsprechend der Fahrpedalstellung. So kann die Prüfung jederzeit durch den Fahrer unterbrochen werden.

Da das Fahrpedal sich in der Maximalposition befindet, kann die Momentenvorgabe als Momentenreduzierung vorgenommen werden. Dabei wird das dem Fahrzeugmotor vorgegebene Drehmoment als Anteil des, aufgrund der Fahrpedalstellung angeforderten Drehmoments dargestellt. Da sich das Fahrpedal in der Kick-down-Position befindet, also maximal durchgetreten ist, wird das Drehmoment als Anteil des maximalen Drehmoments der Motorsteuerung vorgegeben. In der vorliegenden Ausführungsform als 10% des maximalen Drehmoments. In einem weiteren Schritt wird die Reibenergie der Kupplung aus dem Drehmoment und der Drehzahl des Motors, der Übersetzung des Getriebes und der Drehzahl der Räder ermittelt. Entspricht diese Reibenergie einer gewünschten Größe so kann angenommen werden, dass die Kupplungssteuerung den Tastpunkt der Kupplung korrekt gelernt hat. Unterschreitet oder überschreitet die Reibenergie die vorbestimmten Grenzen, so wird die Kupplungssteuerung von einem falschen Tastpunkt der Kupplung ausgehen und die Kupplungssteuerung muss nochmals eingestellt werden.

## Patentansprüche

1. Verfahren zur Prüfung der Kupplungssteuerung eines Fahrzeugs nach der Fahrzeugproduktion, wobei ein Fahrzeugmotor, der mit der Kupplung verbunden ist, durch eine Motorsteuerung gesteuert wird und der Fahrzeugmotor ein Motordrehmoment hervorbringt, wobei das Motordrehmoment durch ein Diagnosemittel vorgegeben wird, **dadurch gekennzeichnet, dass** das Verfahren durch eine Betätigung des Fahrpedals eingeleitet wird und dass das von dem Diagnosemittel vorgegebene Motormoment unabhängig von der Stellung des Fahrpedals ist.

2. Verfahren nach Anspruch 1, **dadurch gekennzeichnet, dass** die Reibenergie der Kupplung ermittelt wird.

3. Verfahren nach einem der vorhergehenden Ansprüche, **dadurch gekennzeichnet, dass** die Kupplungssteuerung mittels eines Rollenprüfstands geprüft wird.

4. Verfahren nach einem der vorhergehenden Ansprüche, **dadurch gekennzeichnet, dass** das Drehmoment aufgrund einer Fahrpedalbetätigung der Motorsteuerung vorgegeben wird.

5. Verfahren, nach dem vorhergehenden Anspruch, **dadurch gekennzeichnet, dass** das Verfahren aufgrund einer maximalen Fahrpedalbetätigung gestartet wird.

6. Verfahren nach einem der vorhergehenden Ansprüchen 4 und 5 **dadurch gekennzeichnet, dass** durch ein Ende der vorgesehenen Fahrpedalbetätigung die Drehmomentvorgabe zur Prüfung der Kupplungssteuerung beendet wird.

7. Verfahren nach einem der vorhergehenden Ansprüche, **dadurch gekennzeichnet, dass** ein Drehmomentverlauf durch das Diagnosemittel vorgegeben wird.

## Claims

1. Method for testing the clutch controller of a vehicle after vehicle production, wherein a vehicle engine which is connected to the clutch is controlled by an engine controller and the vehicle engine generates an engine torque, wherein the engine torque is predefined by a diagnostic means, **characterized in that** the method is initiated by an actuation of the accelerator pedal and **in that** the engine torque predefined by the diagnostic means is independent of the position of the accelerator pedal.

2. Method according to Claim 1, **characterized in that** the friction energy of the clutch is determined.

3. Method according to one of the preceding claims, **characterized in that** the clutch controller is tested by means of a roller test stand.

4. Method according to one of the preceding claims, **characterized in that** the torque is predefined to the engine controller on the basis of an accelerator pedal actuation.

5. Method according to the preceding claim, **characterized in that** the method is started on account of a maximum accelerator pedal actuation.

6. Method according to one of the preceding Claims 4 and 5, **characterized in that** torque predefinition for the testing of the clutch controller is ended by virtue of the provided accelerator pedal actuation being ended.

7. Method according to one of the preceding claims, **characterized in that** a torque profile is predefined by the diagnostic means.

## Revendications

1. Procédé de contrôle de la commande d'un embrayage d'un véhicule après la production du véhicule, dans lequel un moteur de véhicule, qui est raccordé à l'embrayage, est commandé par une commande de moteur et le moteur de véhicule génère un couple de moteur, le couple moteur étant prédéfini par un moyen de diagnostic, **caractérisé en ce que** le procédé est amorcé par l'actionnement d'une pédale d'accélérateur et **en ce que** le couple moteur prédéfini par le moyen de diagnostic est indépendant de la position de la pédale d'accélérateur.

2. Procédé selon la revendication 1, **caractérisé en ce que** l'énergie de friction de l'embrayage est déterminée.

3. Procédé selon l'une quelconque des revendications précédentes, **caractérisé en ce que** la commande d'embrayage est contrôlée au moyen d'un banc d'essai à rouleau.

4. Procédé selon l'une quelconque des revendications précédentes, **caractérisé en ce que** le couple est prédéfini sur la base de l'actionnement d'une pédale l'accélération de la commande du moteur.

5. Procédé selon la revendication précédente, **caractérisé en ce que** le procédé est commencé sur la base de l'actionnement maximal d'une pédale d'accélérateur.

6. Procédé selon l'une quelconque des revendications 4 et 5, **caractérisé en ce que** la valeur prédéfinie du couple pour le contrôle de la commande de l'embrayage est terminée par la fin de l'actionnement prévu de la pédale d'accélérateur.

7. Procédé selon l'une quelconque des revendications précédentes, **caractérisé en ce qu'**une allure de couple est prédéfinie par le moyen de diagnostic.
